# EUROPÄISCHE PATENTSCHRIFT

(11) **EP 1 258 572 B1**
(45) Veröffentlichungstag und Bekanntmachung des Hinweises auf die Patenterteilung: **31.05.2006**
(21) Anmeldenummer: 02008682.3
(22) Anmeldetag: 18.04.2002
(51) Int. Cl.: E03F 7/10

(54) **Filtereinrichtung zur Filterung von aus einer Schmutzkammer abzuführendem Wasser**
Filter device for filtering water leaving a tank holding dirty water
Dispositif de filtration pour filtrage d'écoulement d'un réservoir des eaux boueuses

(30) Priorität: 09.05.2001 AT 7382001
(43) Veröffentlichungstag der Anmeldung: 20.11.2002
(73) Patentinhaber: Kaiser Aktiengesellschaft, FL-9486 Schaanwald (LI)
(72) Erfinder: Kaiser, Dietmar, FL-9486 Schaanwald (LI)
(74) Vertreter: Hefel, Herbert

(56) Entgegenhaltungen:
- EP-A- 0 547 425
- DE-A- 19 939 338
- US-A- 4 028 247

## Beschreibung

Die Erfindung betrifft ein Kanalreinigungsfahrzeug mit den Merkmalen des Anspruchs 1. Weiters betrifft die Erfindung ein Verfahren zur Freihaltung der Sieboberfläche mit den Merkmalen des Anspruchs 8.

Kanalreinigungsfahrzeuge sind in unterschiedlichen Ausführungsformen bekannt. Beispiele für Veröffentlichungen, die solche Kanalreinigungsfahrzeuge beschreiben sind die DE 41 06 088 A1, DE 39 30 918 A1, EP 0 075 603 A1, DE 28 24 432 A1 und DE 31 40 200 A1. Insbesondere entspricht DE 3140200A1 dem Oberbegriff der Ansprüche 1 und 8. Diese Kanalreinigungsfahrzeuge weisen einen Tank mit einer unterschiedlichen Anzahl von Kammern auf, beispielsweise einer Schmutz- oder Schlammkammer, einer Zwischenkammer und einer Brauch- oder Frischwasserkammer. Zwischen diesen Kammern sind Filtereinrichtungen angeordnet. Mittels einer Hochdruckpumpe und einem in den Kanal absenkbaren Hochdruckschlauch wird Spülwasser in den zu reinigenden Kanal gefördert. Mittels eines in den Kanal absenkbaren Saugschlauches wird ein Schlamm-Wassergemisch aus dem Kanal in die unter einem Unterdruck stehende Schmutzkammer gefördert. Es ist bereits bekannt auf die Zwischenkammer und gegebenenfalls auch auf die Brauchwasserkammer zu verzichten, so daß das dem Hochdruckschlauch zugeführte Wasser im letzteren Fall direkt aus der Schlammkammer entnommen wird, wofür eine entsprechend leistungsfähige Filtereinrichtung erforderlich ist.

Filtereinrichtungen zur Filtrierung von aus einer Schmutzkammer, die beispielsweise in einem Kanalreinigungsfahrzeug angeordnet ist, abzuführendem Wasser sind in unterschiedlichen Ausführungsformen bekannt. Es sind hierbei Ausbildungsformen bekannt, die zum Filtern des Wassers ein Spaltsieb verwenden, das einen aus parallel verlaufenden Profildrähten bestehenden Siebbelag aufweist. Solche Spaltsiebe können plan ausgebildet sein. Zur Entfernung von an der Sieboberfläche angelagertem Schmutz, der die Siebleistung im Laufe der Zeit immer stärker verringern würde, sind nach Art von Rechen ausgebildete Schaber vorgesehen, die in regelmäßigen Intervallen über die Sieboberfläche geführt werden und den angelagerten Schmutz von der Sieboberfläche abstreifen. Es ist weiters bereits bekannt, derartige Spaltsiebe zylindrisch auszubilden, wobei das gesiebte Wasser aus dem Innenraum des Spaltsiebs abgeführt wird. Diese trommelförmigen Spaltsiebe sind in der Schmutzkammer üblicherweise horizontal angeordnet und werden zur Reinigung der Sieboberfläche gleichförmig gedreht, wobei ein stationärer Abstreifer über die Sieboberfläche geführt wird.

Probleme bei der Reinigung von Spaltsieben mittels Abstreifern ergeben sich insbesondere im Fall von fetthaltigen Verschmutzungenades aufgenommenen Wassers, wie sie im praktischen Betrieb vorkommen können. Durch die Abstreifer wird das Fett zusammen mit Schmutzpartikeln auf der Sieboberfläche verschmiert, so daß sich das Sieb verstopft und eine umständliche und zeitaufwendige Reinigung des Siebes erforderlich macht, wobei die Schmutzkammer entleert werden muß.

Bekannt ist weiters eine nach Art eines Hydrozyklons aufgebaute Filtereinrichtung zur Nachfiltrierung, die ein stationäres, vertikal ausgerichtetes, zylindrisches Spaltsieb umfaßt, das in einer zylindrischen Kammer angeordnet ist. Im ringförmigen Zwischenraum zwischen dem zylinderförmigen Spaltsieb und der Kammerwandung befindet sich ein gleichsinnig umlaufender Rotorflügel, um eine gleichsinnige Strömung in der Kammer aufzubauen. Diese Filtereinrichtung ist nur als Nachfilter, nicht aber als Grobfilter zur Filterung von aus einer Schmutzkammer abzuführenden Wasser geeignet.

Aus der US-A-4,028,247 ist weiters eine Filtereinrichtung für Kühl-Öl eines Schneidwerkzeugs einer Werkzeugmaschine bekannt. Um Verschmutzungen, insbesondere Späne von der äußeren Oberfläche des zylindrischen Filters abzuschütteln wird das Filter in eine vibrierende Drehbewegung versetzt. Es wirkt hierzu eine sich drehende Nockenscheibe mit einem mit dem Filter verbundenen Nockenfolgerad zusammen, wobei das Nockenfolgerad durch eine Feder am Umfang der Nockenscheibe gehalten wird. Eine kontinuierliche Drehung der Nockenscheibe führt zur oszillierenden Bewegung des Filters mit einer aus der Nockenhöhe resultierenden entsprechend kleinen Amplitude.

Die EP 547 425 A1 beschreibt eine Siebvorrichtung für Wasser- und Abwasserreinigungsanlagen, bei welcher eine Siebtrommel um eine vertikale Achse umläuft. Die Siebtrommel besteht aus in Umfangsrichtung gewickelten Siebstäben. An der Außenseite der Siebtrommel wird eine Schableiste mit Federn angedrückt.

Bei der aus der DE 199 39 338 A1 bekannten Vorrichtung zum Abtrennen von feinen Feststoffen aus Flüssigkeiten ist innerhalb eines zylindrischen Feinsiebes eine Vibratoreinrichtung angeordnet, die eine kreisförmige Vibratorschwingung ausübt. Die sich zyklisch ändernden Drücke wirken auf die durch den Ringspalt zwischen dem Vibrator und dem Sieb fließende Flüssigkeit. Auf der äußeren Oberfläche des Vibrators ist eine spiralförmige Leiteinrichtung angeordnet.

Aufgabe der Erfindung ist es, ein Kanalreinigungsfahrzeug der eingangs genannten Art bereitzustellen, dessen Filtereinrichtung sich durch einen einfachen Aufbau und eine gute Filterleistung auszeichnet, wobei die Gefahr der Verstopfung des Siebes gerade im Falle von fett- bzw. ölhaltigen Verschmutzungen verringert ist. Erfindungsgemäß gelingt dies durch ein Kanalreinigungsfahrzeug mit den Merkmalen des Anspruchs 1. Ein erfindungsgemäßes Verfahren ist gekennzeichnet durch die Merkmale des Anspruchs 8.

Durch die wechselweise Drehbewegung des Spaltsiebes in die beiden Drehrichtungen wird die Oberfläche des Spaltsiebes einer Gegenströmung ausgesetzt: Bei der Drehung des Spaltsiebes wird Wasser mitgenommen, welches bei der Umkehrung der Drehrichtung eine Gegenströmung ausbildet, die an der Oberfläche des Siebes vorhandene Schmutzteile löst. Es wurde beobachtet, daß nach dem Abschalten der wechselweisen Drehbewegung die Oberfläche des Siebes innerhalb von kurzer Zeit durch angelagerten Schmutz belegt wird. Nach dem Einschalten einer oszillatorischen Bewegung des Siebes wird die Oberfläche dagegen rasch wieder frei.

Bevorzugterweise ist vorgesehen, daß die Drehachse des Spaltsiebes in einem Winkelbereich von 45° um die Vertikale liegt, vorzugsweise im wesentlichen vertikal ausgerichtet ist. Es wird dadurch durch die Bewegung des Siebes weniger Schmutz aufgewirbelt als im Falle einer horizontalen Anordnung.

Weitere Vorteile und Einzelheiten der Erfindung werden im folgenden anhand eines in der beiliegenden Zeichnung dargestellten bevorzugten Ausführungsbeispiels der Erfindung erläutert. In der Zeichnung zeigen:
- Fig. 1: eine schematische Darstellung einer in ein Kanalreinigungsfahrzeug eingebauten erfindungsgemäßen Filtereinrichtung;
- Fig. 2: eine perspektivische (teilweise schematisierte) Darstellung des drehbar gelagerten und mittels eines Hydromotors antreibbaren Spaltsiebes und
- Fig. 3: und Fig. 4 Teildarstellungen von im Zusammenhang mit der Erfindung verwendbaren Ausführungsformen von Spaltsieben.

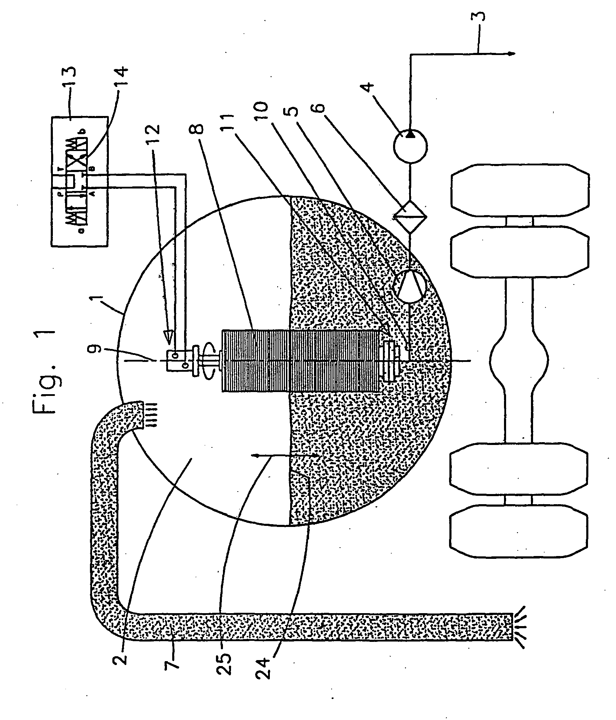

Das Kanalreinigungsfahrzeug, in das die Filtereinrichtung beim Ausführungsbeispiel gem. Fig. 1 eingebaut ist, umfaßt einen Tank 1, der eine Schlamm- oder Schmutzkammer 2 aufweist. Ein in einen zu reinigenden Kanal absenkbarer Hochdruckschlauch 3 (der in Fig. 1 nur schematisch angeordnet ist) wird von einer Hochdruckpumpe 4 beaufschlagt. In Serie mit der Hochdruckpumpe 4 ist eine Förderpumpe 5 geschaltet. Falls dies für die Hochdruckpumpe 4 erforderlich ist, kann zwischen der Förderpumpe 5 und der Hochdruckpumpe 4 ein Feinfilter 6 zwischengeschaltet sein. Das der Förderpumpe 5 zugeführte Brauchwasser wird dem in der Schmutzkammer vorhanden Schmutzwasser entnommen, indem es durch eine weiter unten beschriebene erfindungsgemäße Filtereinrichtung geführt wird.

Durch den in der Schmutzkammer 2 vorliegenden Unterdruck, der beispielsweise durch Entnahme von Wasser über die Förderpumpe 5 ausgebildet wird, wird ein Saugschlauch 7 beaufschlagt. Dieser ist in den zu reinigenden Kanal absenkbar und saugt das Wasser-Schlammgemisch ab.

Die Filtereinrichtung umfaßt ein zylinderförmiges Spaltsieb 8, das um seine Längsachse bzw. Rotationssymmetrieachse drehbar innerhalb der Schmutzkammer 2 gelagert ist, wobei diese Drehachse 9 im wesentlichen vertikal angeordnet ist. Für die Abführleitung 10 für das gefilterte Wasser ist eine Drehdurchführung 11 vorgesehen. Der Antrieb des Spaltsiebes 8 erfolgt über einen Hydraulik-Antriebsmotor 12, der von einer Steuereinrichtung 13 angesteuert wird, die ein Wegeventil 14 umfaßt. Der Antriebsmotor 12 und die Steuereinrichtung 13 stellen zusammen eine Oszillationsantriebseinrichtung für das Spaltsieb dar, mittels der das Spaltsieb 8 in eine wechselweise Drehbewegung in die beiden Drehrichtungen versetzt wird. In jede der beiden Drehrichtungen wird das Spaltsieb um einen Winkel gedreht, der im Bereich zwischen 150° und 500°, vorzugsweise im Bereich zwischen 270° und 360° liegt. Die Drehbewegungen in die beiden Drehrichtungen erfolgen dabei bevorzugt unmittelbar aufeinander und die Drehgeschwindigkeiten liegen im Bereich von 10 bis 200 Umdrehungen pro Minute, vorzugsweise im Bereich von 25 bis 100 Umdrehungen pro Minute. Eine Drehgeschwindigkeit von 50 Umdrehungen pro Minute hat sich beispielsweise bewährt bei einem Spaltsieb mit einem Durchmesser von 300mm. Die Länge des Spaltsiebs 8 hängt von der Größe der Schmutzkammer ab und kann beispielsweise 1,5m betragen. Bevorzugt sind ein gleicher Drehwinkel und eine gleiche Drehgeschwindigkeit in die beiden Drehrichtungen.

Zur Ansteuerung des Antriebsmotors 12 in die wechselseitigen Drehrichtungen umfaßt die Steuereinrichtung 13 eine entsprechende Steuerelektronik zur Ansteuerung des Wegeventils 14.

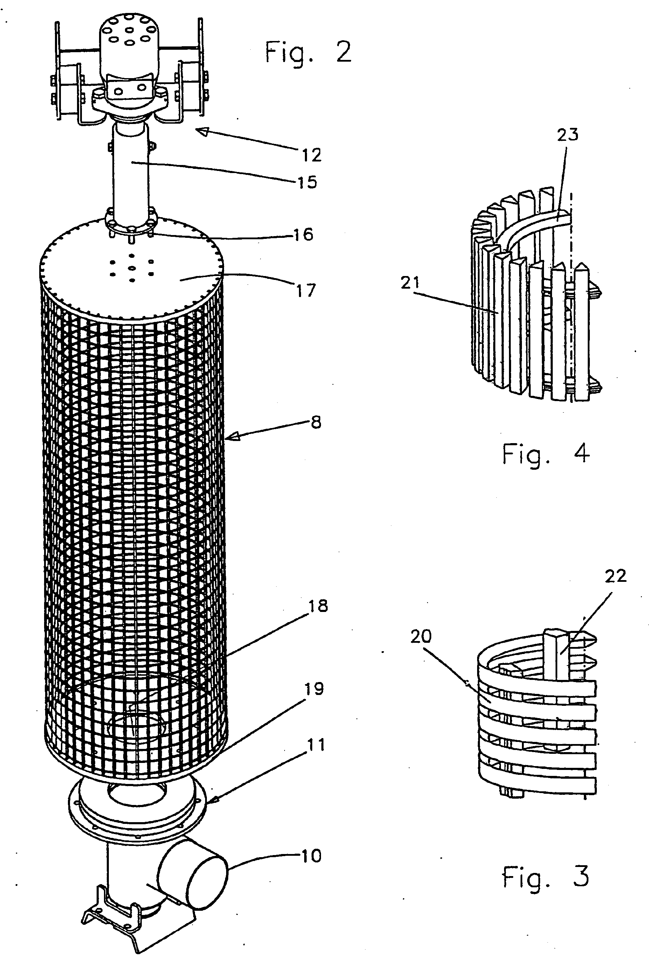

Der genauere Aufbau der drehbaren Lagerung des Spaltsiebs ist in Fig. 2 dargestellt. Der Antriebsmotor 12 treibt eine Antriebswelle 15 an, die an ihrem unteren Ende einen Flansch 16 aufweist. Befestigungsschrauben durchsetzen Bohrungen im Flansch 16 und im Deckel 17 des Spaltsiebes 8 zur Verschraubung der Antriebswelle 15 mit dem Deckel 17. Im Boden 19 ist eine Öffnung 18 ausgespart, von der aus über eine Drehdurchführung 11 die Abführleitung 10 ausgeht.

Die Gitterstäbe des Spaltsiebes sind in Fig. 2 nur schematisch dargestellt. Die Fig. 3 und 4 zeigen mögliche Ausführungsbeispiele von solchen Spaltsieben. Der Siebbelag wird von Profil- drähten 20, 21 gebildet. Im Ausführungsbeispiel nach Fig. 3 verlaufen die Profildrähte 20 spiralig und werden von längs verlaufenden Querdrähten 22 gehalten. Im Ausführungsbeispiel nach Fig. 4 verlaufen die Profildrähte 21 in Längsrichtung und werden von ringförmigen Querdrähten 23 gehalten. Derartige Spaltsiebe sind bekannt.

Der Flüssigkeitsspiegel 24 in der Schmutzkammer 2 kann in gewissen Grenzen variieren, wie durch den Doppelpfeil 25 angedeutet ist und kann durch entsprechende Sensoren überwacht werden. Der Flüssigkeitsspiegel liegt dabei in Fig. 1 oberhalb des unteren Endes des Spaltsiebes 8 und unterhalb des oberen Endes des Spaltsiebes, kann aber auch über das obere Ende des Spaltsiebes hinausgehen.

Ein Kanalreinigungsfahrzeug mit einer erfindungsgemäßen Filtereinrichtung kann auch zwei oder mehrere Kammern aufweisen, wobei das mittels einer erfindungsgemäßen Filtereinrichtung gefilterte aus der Schmutzkammer abgeführte Wasser einer Zwischenkammer oder einer Brauchwasserkammer zugeführt werden kann. Zur Erzeugung eines Unterdrucks in der Schmutzkammer 2 können weitere Pumpeinrichtungen vorgesehen sein, beispielsweise eine Vakuumpumpe in Form einer herkömmlichen Wasserringpumpe.

Es wäre weiters denkbar und möglich zusätzlich von Zeit zu Zeit eine mechanische Reinigung für das Spaltsieb 8 vorzusehen, obwohl die alleinige Reinigung mittels der wechselweisen Drehbewegung des Spaltsiebes bevorzugt ist. Eine solche mechanische Reinigung würde im Gegensatz zur kontinuierlichen Reinigung mittels der wechselweisen Drehbewegung des Spaltsiebes diskontinuierlich, das heißt erst nach längeren Betriebsabschnitten ohne eine solche mechanische Reinigung, durchgeführt werden.

Insbesondere wenn die Schmutzkammer mittels einer separaten Vakuumpumpe unter ein Vakuum setzbar ist, könnte die Förderpumpe 5 in Serie zur Hochdruckpumpe 4 auch entfallen.

Das Spaltsieb könnte grundsätzlich auch eine andere als eine zylindrische rotationssymmetrische Form aufweisen, beispielsweise kegelstumpfförmig ausgebildet sein.

### Legende

### zu den Hinweisziffern:

- 1: Tank
- 2: Schmutzkammer
- 3: Hochdruckschlauch
- 4: Hochdruckpumpe
- 5: Förderpumpe
- 6: Feinfilter
- 7: Saugschlauch
- 8: Spaltsieb
- 9: Drehachse
- 10: Abführleitung
- 11: Drehdurchführung
- 12: Antriebsmotor
- 13: Steuereinrichtung
- 14: Wegeventil
- 15: Antriebswelle
- 16: Flansch
- 17: Deckel
- 18: Öffnung
- 19: Boden
- 20: Profildraht
- 21: Profildraht
- 22: Querdraht
- 23: Querdraht
- 24: Flüssigkeitsspiegel
- 25: Doppelpfeil

## Patentansprüche

1. Kanalreinigungsfahrzeug mit einem Tank (1), der eine Schmutzkammer (2) aufweist, und mit einem in den zu reinigenden Kanal absenkbaren Hochdruckschlauch (3), der von einer Hochdruckpumpe (4) mit Brauchwasser beaufschlagbar ist, und einem in den Kanal absenkbaren Saugschlauch, der in die im Tank (1) angeordnete Schmutzkammer (2) mündet, wobei das Kanalreinigungsfahrzeug weiters eine Filtereinrichtung zur Filterung von aus der Schmutzkammer (2) abzuführendem Wasser aufweist, die ein in der Schmutzkammer (2) angeordnetes rotationssymmetrisches, insbesondere zylinderförmiges, Spaltsieb (8) umfasst, in dessen Innenraum das zu filternde Wasser einströmt und von dessen Innenraum die Abführleitung für das gefilterte Wasser ausgeht, wobei das Spaltsieb (8) um seine Rotationssymmetrieachse drehbar gelagert ist, **dadurch gekennzeichnet, daß** zur berührungsfreien Freihaltung der Sieboberfläche von Schmutzanlagerungen eine Oszillationsantriebseinrichtung (12, 13, 14) vorgesehen ist, die das Spaltsieb (8) in eine wechselweise Drehbewegung in die beiden Drehrichtungen versetzt, wobei die Drehwinkel der wechselweisen Drehbewegungen in die beiden Drehrichtungen jeweils im Bereich zwischen 150° und 500° liegen.

2. Kanalreinigungsfahrzeug nach Anspruch 1, **dadurch gekennzeichnet, daß** die Drehachse (9) des Spaltsiebes (8) in einem Winkelbereich von 45° um die Vertikale liegt, vorzugsweise im wesentlichen vertikal ausgerichtet ist.

3. Kanatreinigungsfahrzeug nach Anspruch 1 oder Anspruch 2, **dadurch gekennzeichnet, daß** die Oszillationsantriebseinrichtung einen Hydraulik-Antriebsmotor (12) umfaßt, der von einer Steuereinrichtung (13) zur Ausführung der oszillatorischen Bewegung angesteuert ist.

4. Kanalreinigungsfahrzeug nach einem der Ansprüche 1 bis 3, **dadurch gekennzeichnet, daß** die Drehwinkel der wechselweisen Drehbewegungen in die beiden Drehrichtungen jeweils im Bereich zwischen 270° und 360° liegen.

5. Kanalreinigungsfahrzeug nach einem der Ansprüche 1 bis 4, **dadurch gekennzeichnet, daß** die Drehgeschwindigkeiten der wechselweisen Drehbewegungen in die beiden Drehrichtungen jeweils im Bereich von 10 bis 200 Umdrehungen pro Minute, vorzugsweise im Bereich von 25 bis 100 Umdrehungen pro Minute liegen.

6. Kanalreinigungsfahrzeug nach einem der Ansprüche 1 bis 5, **dadurch gekennzeichnet, daß** zum Abführen des Wassers durch die Abführleitung (10) eine Fördereinrichtung vorgesehen ist, die eine Hochdruckpumpe (4) umfaßt oder von dieser gebildet wird.

7. Kanalreinigungsfahrzeug nach einem der Ansprüche 1 bis 6, **dadurch gekennzeichnet, daß** das Spaltsieb (8) einen spiralig um die Längsachse verlaufenden Profildraht (20) aufweist.

8. Verfahren zur Freihaltung der Sieboberfläche eines rotationssymmetrischen, insbesondere zyinderförmigen, Spaltsiebes (8) von Schmutzanlagerungen, wobei das Spaltsieb (8), welches Teil einer Filtereinrichtung zur Filterung von aus einer Schmutzkammer (2) im Tank (1) eines Kanalreinigunsfahrzeugs abzuführendem Wasser ist, um seine Rotationssymmetrieachse drehbar gelagert ist, **dadurch gekennzeichnet, daß** zur berührungsfreien Freihaltung der Sieboberfläche von Schmutzanlagerungen das Spaltsieb (8) wechselweise in beide Drehrichtungen gedreht wird, wobei das Spaltsieb (8) mit wechselweisen Drehbewegungen in die beiden Drehrichtungen jeweils im Bereich zwischen 150° und 500° bewegt wird.

9. Verfahren nach Anspruch 8, **dadurch gekennzeichnet, daß** die Drehbewegungen des Spaltsiebes (8) in die beiden Drehrichtungen unmittelbar aufeinanderfolgen.

10. Verfahren nach Anspruch 8 oder Anspruch 9, **dadurch gekennzeichnet, daß** die Drehachse (9) des Spaltsiebes in einem Winkelbereich von 45° um die Vertikale angeordnet wird, vorzugsweise im wesentlichen vertikal angeordnet wird.

11. Verfahren nach einem der Ansprüche 8 bis 10, **dadurch gekennzeichnet, daß** das Spaltsieb (8) mit wechselweisen Drehbewegungen in die beiden Drehrichtungen jeweils im Bereich zwischen 270° und 360° bewegt wird.

12. Verfahren nach einem der Ansprüche 8 bis 11, **dadurch gekennzeichnet, daß** das Spaltsieb (8) mit Drehgeschwindigkeiten der wechselweisen Drehbewegungen in die beiden Drehrichtungen jeweils im Bereich von 10 bis 200 Umdrehungen pro Minute, vorzugsweise im Bereich von 25 bis 100 Umdrehungen pro Minute liegen, bewegt wird.

## Claims

1. A sewer-cleaning vehicle with a tank (1) which has a waste water chamber (2), and with a high-pressure hose (3) which can be lowered into the sewer that is to be cleaned and into which service water can be introduced by a high-pressure pump (4), and with a suction hose which can be lowered into the sewer and which discharges into the waste water chamber (2) arranged in the tank (1), the sewer-cleaning vehicle also having a filter device for filtering water to be discharged from the waste water chamber (2), which device comprises a rotationally symmetrical, especially cylindrical, slotted screen (8) arranged in the waste water chamber (2), into the interior of which screen the water to be filtered flows and from the interior of which screen there extends the discharge pipe for the filtered water, the slotted screen (8) being mounted so as to rotate about its axis of rotational symmetry, **characterised in that**, to keep the screen surface free of waste deposits in a non-contacting manner, there is provided an oscillating drive device (12, 13, 14) which sets the slotted screen (8) into an alternate rotational movement in the two directions of rotation, each of the angles of rotation of the alternate rotational movements in the two directions of rotation being in the range between 150° and 500°.

2. A sewer-cleaning vehicle according to claim 1, **characterised in that** the axis of rotation (9) of the slotted screen (8) is in an angular range of 45° about the vertical, preferably being substantially vertically aligned.

3. A sewer-cleaning vehicle according to claim 1 or claim 2, **characterised in that** the oscillating drive device has a hydraulic drive motor (12) controlled by a control device (13) for carrying out the oscillatory motion.

4. A sewer-cleaning vehicle according to any one of claims 1 to 3, **characterised in that** each of the angles of rotation of the alternate rotational movements in the two directions of rotation is in the range between 270° and 360°.

5. A sewer-cleaning vehicle according to any one of claims 1 to 4, **characterised in that** the rotational speeds of the alternate rotational movements in the two directions of rotation are each in the range 10 to 200 revolutions per minute, preferably in the range 25 to 100 revolutions per minute.

6. A sewer-cleaning vehicle according to any one of claims 1 to 5, **characterised in that**, for discharging the water through the discharge pipe (10), there is provided a delivery device which comprises a high-pressure pump (4) or is formed thereby.

7. A sewer-cleaning vehicle according to any one of claims 1 to 6, **characterised in that** the slotted screen (8) has a wedge wire (20) extending helically about the longitudinal axis.

8. A method for keeping the screen surface of a rotationally symmetrical, especially cylindrical, slotted screen (8) free of waste deposits, the slotted screen (8), which is part of a filter device for filtering water to be discharged from a waste water chamber (2) in the tank (1) of a sewer-cleaning vehicle, being mounted so as to rotate about its axis of rotational symmetry, **characterised in that**, to keep the screen surface free of waste deposits in a non-contacting manner, the slotted screen (8) is rotated alternately in the two directions of rotation, the slotted screen (8) being moved with alternate rotational movements in the two directions of rotation in the range between 150° and 500° in each instance.

9. A method according to claim 8, **characterised in that** the rotational movements of the slotted screen (8) in the two directions of rotation follow immediately one upon the other.

10. A method according to claim 8 or claim 9, **characterised in that** the axis of rotation (9) of the slotted screen is arranged in an angular range of 45° about the vertical, preferably being substantially vertically arranged.

11. A method according to any one of claims 8 to 10, **characterised in that** the slotted screen (8) is moved with alternate rotational movements in the two directions of rotation in the range between 270° and 360° in each instance.

12. A method according to any one of claims 8 to 11, **characterised in that** the slotted screen (8) is moved at rotational speeds of the alternate rotational movements in the two directions of rotation in each case in the range 10 to 200 revolutions per minute, preferably in the range 25 to 100 revolutions per minute.

## Revendications

1. Véhicule pour le nettoyage de canalisations comprenant
- un réservoir (1) qui forme une chambre à boues (2),
- un flexible haute pression (3) abaissé dans la canalisation à nettoyer, et chargé en eau industrielle par une pompe haute pression (4),
- un flexible d'aspiration pouvant être abaissé dans la canalisation, et débouchant dans la chambre à boues (2) du réservoir (1),
- un dispositif pour la filtration de l'eau à évacuer de la chambre à boues (2), avec un tamis en colonne (8) en particulier cylindrique, symétrique en rotation, logé dans la chambre à boues (2), à l'intérieur duquel s'écoule l'eau à filtrer et de l'intérieur duquel sort la conduite d'évacuation d'eau filtrée, le tamis en colonne (8) pivotant autour de son axe de rotation,
**caractérisé en ce que**
pour maintenir exempte de dépôts de boue sans débordement la surface du tamis, un dispositif oscillant (12, 13, 14) entraîne le tamis en colonne (8) dans un mouvement de rotation alternatif dans les deux sens, les angles de rotation des mouvements alternatifs dans les deux sens de rotation étant respectivement compris entre 150° et 500°.

2. Véhicule de nettoyage de canalisations selon la revendication 1,
**caractérisé en ce que**
l'axe de rotation (9) du tamis en colonne (8) se trouve dans une zone angulaire de 45° autour de la verticale, de préférence orienté pour l'essentiel verticalement.

3. Véhicule de nettoyage de canalisations selon la revendication 1 ou 2,
**caractérisé en ce que**
le dispositif d'entraînement oscillant comprend un moteur hydraulique (12) commandé par un dispositif de commande (13) pour exécuter le mouvement d'oscillation.

4. Véhicule de nettoyage de canalisations selon l'une quelconque des revendications 1 à 3,
**caractérisé en ce que**
les angles de rotation des mouvements alternatifs dans les deux sens de rotation sont respectivement compris entre 270° et 360°.

5. Véhicule de nettoyage de canalisations selon l'une quelconque des revendications 1 à 4,
**caractérisé en ce que**
les vitesses de rotation des mouvements alternatifs dans les deux sens de rotation sont respectivement comprises entre 10 et 200 tours par minute, de préférence entre 25 et 100 tours par minute.

6. Véhicule de nettoyage de canalisations selon l'une quelconque des revendications 1 à 5,
**caractérisé en ce que**
pour l'évacuation de l'eau à travers la conduite d'évacuation (10) un dispositif d'acheminement comprend une pompe haute pression (4) ou est formée par celle-ci.

7. Véhicule de nettoyage de canalisations selon l'une quelconque des revendications 1 à 6,
**caractérisé par**
un fil profilé (20) s'étendant en spirale autour de l'axe longitudinal du tamis en colonne (8).

8. Procédé pour maintenir exempte de dépôts de boue la surface d'un tamis en colonne (8) symétrique en rotation, en particulier cylindrique, le tamis en colonne (8) faisant partie d'un dispositif pour la filtration de l'eau à évacuer hors d'une chambre à boues (2) du réservoir (1) d'un véhicule de nettoyage de canalisations, et logé de manière pivotante autour de son axe de symétrie en rotation,
**caractérisé en ce que**
pour maintenir sa surface exempte de dépôts de boue sans débordement, le tamis en colonne (8) est tourné alternativement dans les deux sens de rotation, et entraîné dans des mouvements de rotation alternatifs dans les deux sens de rotation respectivement selon des angles compris entre 150° et 500°.

9. Procédé selon la revendication 8,
**caractérisé en ce que**
les mouvements du tamis en colonne (8) dans les deux sens de rotation se succèdent immédiatement.

10. Procédé selon la revendication 8 ou 9,
**caractérisé en ce que**
l'axe de rotation (9) du tamis en colonne (8) est disposé dans une zone angulaire de 45° autour de la verticale, de préférence pour l'essentiel verticalement.

11. Procédé selon l'une quelconque des revendications 8 à 10,
**caractérisé en ce que**
le tamis en colonne (8) est entraîné dans des mouvements de rotation alternatifs dans les deux sens de rotation respectivement selon des angles compris entre 270° et 360°.

12. Procédé selon l'une quelconque des revendications 8 à 11,
**caractérisé en ce que**
le tamis en colonne (8) est entraîné avec des vitesses de rotation des mouvements alternatifs, dans les deux sens de rotation, respectivement comprises entre 10 et 200 tours par minute, de préférence comprises entre 25 et 100 tours par minute.
